# EUROPEAN PATENT APPLICATION

(11) **EP 1 389 750 A1**
(43) Date of publication of application: **18.02.2004**
(21) Application number: 02292028.4
(22) Date of filing: 13.08.2002
(51) Int. Cl.: G06F 1/00

(54) **Hard disk security**

(71) Applicant: Canal + Technologies, 75906 Paris Cedex 15 (FR)
(72) Inventor: Proust, Laurent, Canal+ Technologies, 75906 Paris Cedex 15 (FR); Beuque, Jean-Bernard, Canal+ Technologies, 75905 Paris cedex 15 (FR); Hamery, Dominique, Canal+ Technologies, 75905 Paris cedex 15 (FR)
(74) Representative: Weihs, Bruno

(57) **Abstract**

A method for securing a system comprising a first device cooperating with a second device, in which the first device and the second device respectively comprise a first encryption feature and a second encryption feature, performs a mutual verification of identity between the first device and the second device. The cooperation between the first device and the second device is interrupted if the mutual verification of identity between the first device and the second device fails. The method may verify in either one device a determined data received from the other device, the determined data resulting from a use of the encryption feature of the other device.

## Description

### Field of the invention

The invention relates to a digital data processing system in which a first device of the system cooperates with a second device of the system.

### Background of the invention

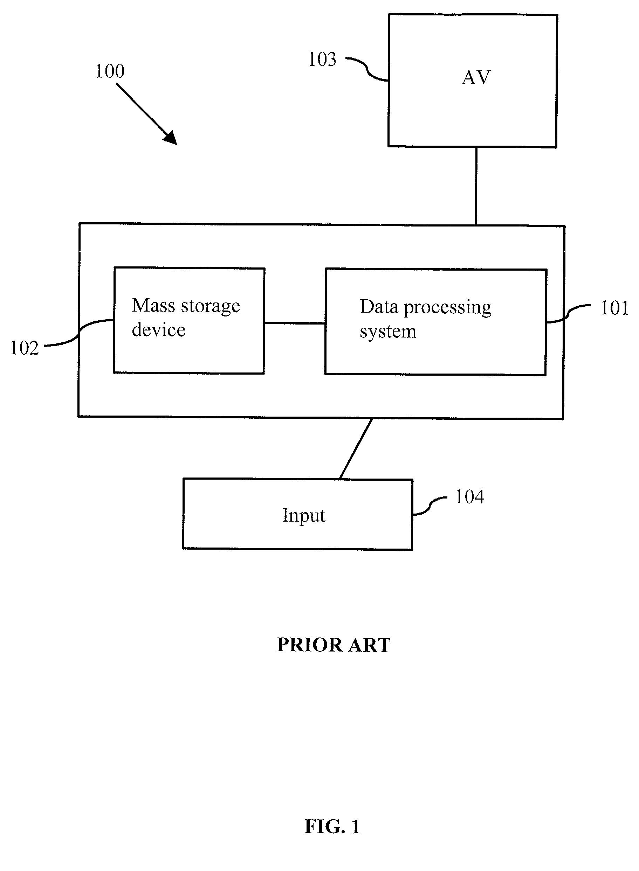

A mass storage device is a device that allows for storage of relatively large amounts of data for subsequent processing or retrieval. A mass storage device is generally connected to a data processing system such as for example a personal computer, an audio/visual player or recorder, a digital camera, a mobile digital device, or a digital television Set Top Box (STB). Fig. 1 shows a typical system 100 comprising a data processing system 101 and a mass storage device 102 connected to the data processing system 101. The data processing system 101 may also include a microprocessor, Random Access Memory (RAM) and Read Only Memory (ROM) memory, an operating system (not shown), etc.... The system 100 may further include additional peripheral devices such as an audio/visual device 103 for rendering graphics and sound produced by the system 100, and an input device 104 that allows a user to enter commands and data into the system 100. The mass storage device 102 may store information produced by the data processing system 101 or received from outside of the system 100, and allow stored information to be available for retrieval and processing.

Many types of mass storage devices are known in the art. Typical mass storage devices include optical storage devices (that generally use an optical disk as data storage support), magnetic and opto-magnetic storage devices (that generally are based on tape or disk data supports). One widespread type of mass storage device is a magnetic Hard Disk (HD) device that has many advantageous characteristics such as rapid random access to data stored, reduced size and affordable price.

The mass storage device may be used to store confidential data or data that should not be used outside of the data processing system. As an example, a HD in a STB may be used to record movies. Often, it is undesirable that an HD storing the movie to be detachable from the STB system to be used with another data processing system. This may lead to illegal exploitation and copies being made in the other data processing system. However, in certain cases it may be desirable to prevent a HD other than the one initially installed in the STB to be used, or to prevent an HD included with one STB to be reused with another STB. This is mainly to reduce the risk of piracy on HD-STB systems, i.e. the use of a legal HD in a pirated STBs or vice-versa. There may be many more reasons for preventing an interchangeability of mass storage devices and data processing systems.

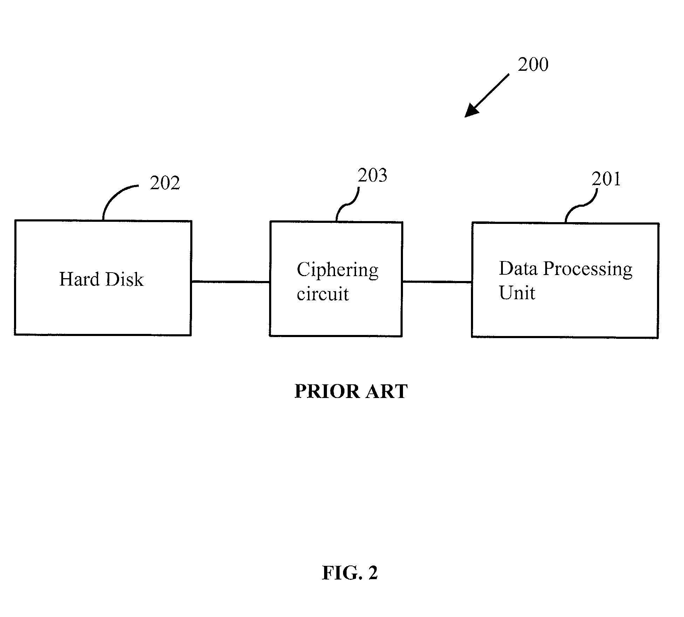

US 5,343,525 discloses a hard disk data security device in a computer, in which data to be stored is encrypted, or data read from the hard disk is decrypted. Fig. 2 shows an example of a computer system 200 comprising a data processing unit 201 and a hard disk 202 that are interfaced with a ciphering circuit 203. When a request for storing or reading data to or from the hard disk 202 is detected, the data enciphering / deciphering circuit 203 is enabled. The data enciphering / deciphering circuit 203 is implemented in hardware in order to minimise the use of the computer's CPU. The computer system 200 allows storage of secured data on the mass storage device 202 in that it requires the data enciphering /deciphering circuit 203 to use decipher the stored data.

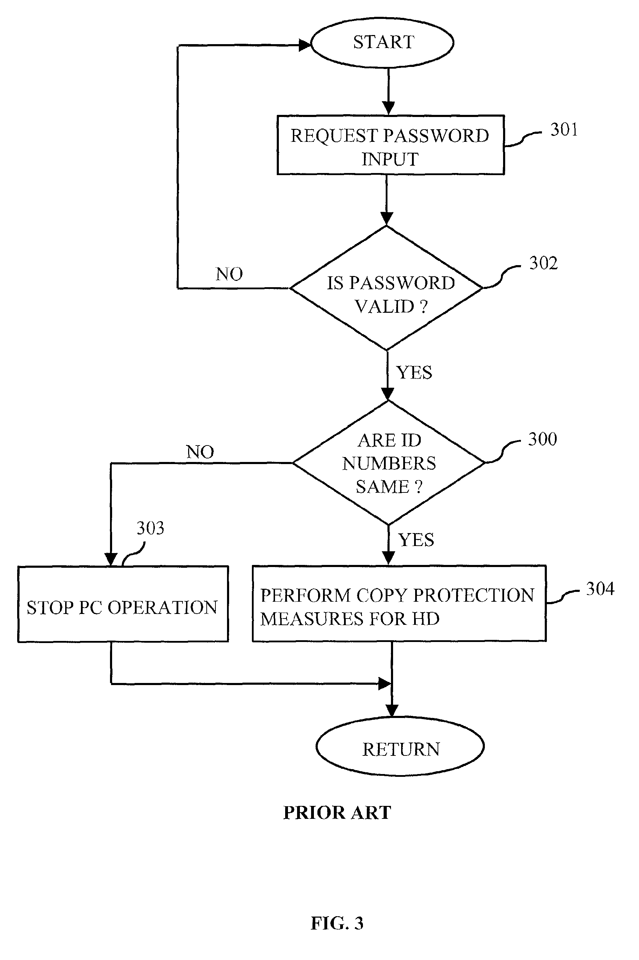

US 6,243,813 discloses a computer system having a detachable security device. The security device determines whether a hard disk in the computer may boot. The computer system determines whether the hard disk is the hard disk that was initially installed in the computer system. Further, the computer system also determines whether the security device is the security device that was initially installed in the computer system. These checks are performed by comparing an identification of the computer system, the hard disk and the security device with each other as shown in box 300 in a flowchart in Fig. 3. The checking can only be performed after receiving a password from the user in box 301, and verifying in box 302 that the password matches a password stored in the computer or on the hard disk. If ID numbers are found to be different the computer operation is stopped in box 303. If the ID numbers are found to be the same, then copy protection measures for data stored on the hard disk are implemented in box 304. In addition, data stored on the hard disk is encrypted.

### Summary of the invention

In a first aspect the invention provides a method for securing a system comprising a first device cooperating with a second device, the first device and the second device respectively comprising a first encryption feature and a second encryption feature. The method comprises performing a mutual verification of identity between the first device and the second device. The method further comprises interrupting the cooperation between the first device and the second device if the mutual verification of identity between the first device and the second device fails.

In a second aspect the invention provides a method for securing a system, in which the performing of the mutual verification further comprises
■ Generating in the first device a first random message,
■ Transmitting the first random message to the second device,
■ Generating a second message in the second device containing the first random message,
■ Hashing and signing the second message using a second private key of the second device,
■ Transmitting the hashed and signed second message to the first device,
■ Processing in the first device the hashed and signed second message using a second public key corresponding to the second private key and obtaining a supposed first random message,
■ Comparing the supposed first random message and the first random message, and
■ Failing the mutual verification of identity if the supposed first random message is different from the first random message.

In a preferred embodiment, the performing of the mutual verification further comprises
■ Generating in the second device a second random message,
■ Generating the second message in the second device containing the first and the second random message,
■ Processing in the first device the hashed and signed second message using the second public key and obtaining an intermediate second random message,
■ Generating a third message in the first device containing the intermediate second random message,
■ Hashing and signing the third message using a first private key of the first device,
■ Transmitting the hashed and signed third message to the second device,
■ Processing in the second device the hashed and signed third message using a first public key corresponding to the first private key and obtaining a supposed second random message,
■ Comparing the supposed second random message and the second random message, and
■ Failing the mutual verification of identity if the supposed second random number is different from the second random number.

In a further preferred embodiment, the performing of the mutual verification comprises
■ Generating the third message in the first device containing the intermediate second random message and a first identification stored in the first device,
■ Processing in the second device the hashed and signed third message using a first public key corresponding to the first private key and obtaining a supposed first identification,
■ Comparing the supposed first identification and the first identification stored in the second device, and
■ Failing the mutual verification of identity if the supposed first identification is different from the first identification.

In a third aspect, the invention provides a method for securing a system comprising a first device cooperating with a second device, the method comprising
■ Initiating a time window,
■ Monitoring an occurrence of a mutual verification of identity between the first device and the second device during the time window, and
■ Interrupting the cooperation between the first device and the second device if the mutual verification of identity between the first device and the second device fails to occur during the time window.

In another preferred embodiment, the method for securing a system comprises
■ Performing the mutual verification of identity between the first device and the second device during the time window, and
■ Interrupting the cooperation between the first device and the second device if the mutual verification of identity between the first device and the second device fails.

In yet another preferred embodiment, the method for securing a system comprises
■ Generating a first time value in the first device,
■ Transmitting the first time value to the second device,
■ Generating a second time value in the second device, the second time value being a function of the first time value.

The monitoring of an occurrence of a mutual verification of identity comprises
■ Waiting in the second device for a determined signal of mutual verification of identity to be received from the first device during the time window corresponding to the second time value, the determined signal representing the occurrence of a mutual verification of identity,and
■ Failing the occurrence of a mutual verification of identity if the determined signal fails to be received during the time window.

In a fourth preferred embodiment, the invention provides a method for securing a system comprising a first device and a second device, the method comprising
■ Generating a first pair of private and public keys
■ Generating a second pair of private and public keys,
■ Storing in the first device the first private key and the second public key,
■ Storing in the second device the second private key and the first public key,
■ Storing in the first device a second identification which is stored in the second device, and
■ Storing in the second device a first identification which is stored in the first device.

In a fifth preferred embodiment, the invention provides a system comprising a first device and a second device connected to exchange data. The system further comprises
■ A first private key stored in the first device and a corresponding first public key stored in the second device,
■ A second private key stored in the second device and a corresponding second public key stored in the first device,
■ A first identification and a second identification respectively stored in both first and second devices,
■ Random message generation means in the first device and in the second device,
the private keys and public keys, the first identification and the second identification, and a random message generated by the random generation means being used for a mutual verification of identity process.

### Brief description of the figures

The invention will now be described in greater detail with reference to the accompanying drawings, in which
Fig. 1 contains a schematic representation of a system comprising a data processing system and a mass storage device as known from prior art,
Fig. 2 contains a schematic representation of a system comprising a data processing system comprising a ciphering unit as known form prior art,
Fig. 3 contains a flowchart illustrating a security process as known form prior art,
Fig. 4 schematically illustrates an example of a digital television broadcast and receiving system,
Fig. 5 schematically illustrates an example of a system comprising a Hard Disk and a Set Top Box,
Fig. 6 contains a flowchart illustrating an example of a process of pairing,
Fig. 7 contains a flowchart describing an example of a method for securing a system through mutual verification of identity,
Fig. 8 contains a flowchart illustrating one embodiment of a method for securing a system applied to a system comprising a Set Top box and a Hard Disk in accordance with the present invention,
Fig. 9 contains a flowchart illustrating one embodiment of a method for securing a system applied to a system comprising a Set Top box and a Hard Disk in accordance with the present invention,
Fig. 10 contains a flowchart illustrating one embodiment of a method for securing a system applied to a system comprising a Set Top box and a Hard Disk in accordance with the present invention,
Fig. 11 contains a flowchart illustrating one embodiment of a method for securing a system applied to a system comprising a Set Top box and a Hard Disk in accordance with the present invention,
Fig. 12 contains a flowchart illustrating one embodiment of a method for securing a system applied to a system comprising a Set Top box and a Hard Disk in accordance with the present invention,
Fig. 13 contains a flowchart illustrating one embodiment of a method for securing a system applied to a system comprising a Set Top box and a Hard Disk in accordance with the present invention,
Fig. 14 contains a flowchart illustrating one embodiment of a method for securing a system applied to a system comprising a Set Top box and a Hard Disk in accordance with the present invention,
Fig. 15 contains a flowchart illustrating one embodiment of a method for securing a system applied to a system comprising a Set Top box and a Hard Disk in accordance with the present invention,
Fig. 16 contains a flowchart illustrating one embodiment of a method for securing a system applied to a system comprising a Set Top box and a Hard Disk in accordance with the present invention,
Fig. 17 contains a flowchart illustrating one embodiment for using a time window a system in a method for securing in accordance with the present invention,
Fig. 18 contains a flowchart illustrating one embodiment of a method for securing a system in which a time window is generated in accordance with the present invention,
Fig. 19 contains a flowchart illustrating one embodiment of a method for securing a system in which a time window is generated in accordance with the present invention,
Fig. 20 contains a flowchart illustrating one embodiment of a method for securing as ystem in which a time window is generated in accordance with the present invention, and
Fig. 21 contains a flowchart illustrating one embodiment of a method of securing a system according to the invention in accordance with the present invention.

### Examples of preferred embodiments

Same references to the drawings will be used throughout this description to designate same elements.

### General overview

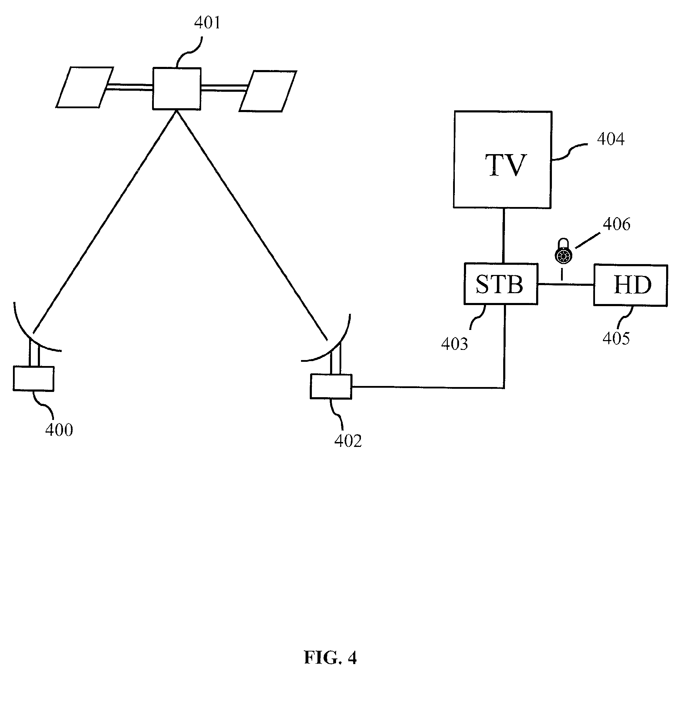

Fig. 4 contains a schematic overview of a digital television broadcast and reception system. A provider broadcasts a bundle of services by means of satellite emitter 400 towards a telecommunication satellite 401, from which the bundle of services is emitted towards a satellite dish receiver 402. A digital Set Top box (STB) 403 receives the bundle of services and decodes a service contained therein. The decoded service is then processed in the STB 403. The STB 403 has an output towards an audio/video rendering device, e.g. a television 404.

The STB 403 comprises hardware and software components (not shown in Fig. 4) which allow, for example, the STB 403 to execute software stored in the STB 403 or received in the bundle of service by way of broadcast. The STB 403 may enable access to various services such as television programs, music programs but also interactive applications, electronic program guides, online commerce, video on demand, etc...

The overview in Fig. 4 is given as an example only. Many other configurations such as a terrestrial or cable broadcast network could be used instead to bring services to the STB 403.

A Hard Disk (HD) 405 is connected to the STB 403. The HD 405 is shown distinct from the STB 403 for reasons of clarity. The HD 405 may of course be included inside a box of the STB 403 and become an integral part of the STB 403. The HD 405 is used as a mass storage device and may store software, data corresponding to television or music programs or other data as allowed by the STB 403. Recent STB applications include access to the internet, video on demand, recording of programs, time shifting while watching a live broadcast program. These applications tend to make an extensive use of the HD 405.

It is becoming a growing concern for service providers to secure the HD 405 in the STB system as is illustrated by a lock 406.

The inventive examples described hereafter allow to uniquely associate the HD 405 and the STB 403 by way of pairing, and to verify during operation and cooperation of the HD 405 and the STB 403 that only the initially associated HD 405 and STB 403 are used.

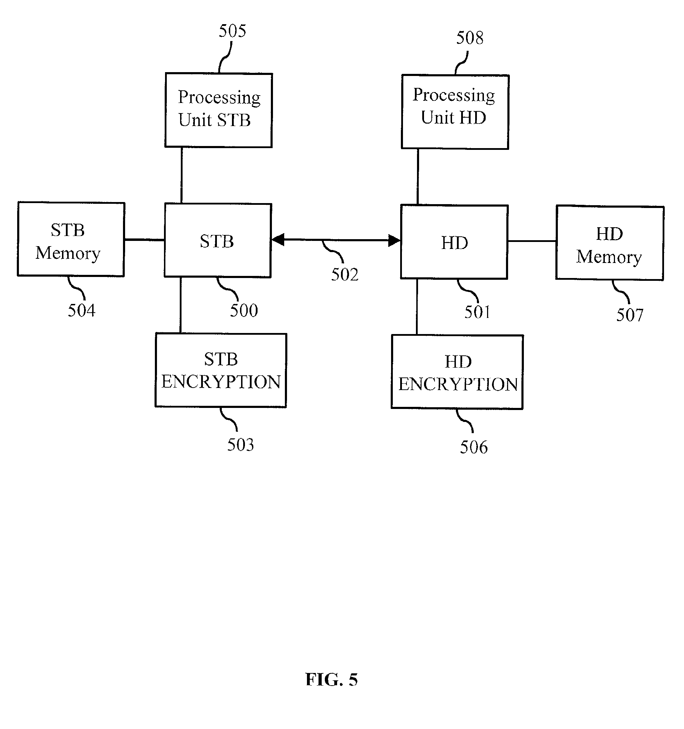

Fig. 5 contains an example of a system in which a STB 500 cooperates with a HD 501 through a connection 502. The connection 502 may for example be a data bus in which commands are exchanged according to a determined protocol. One such protocol is typically an ATA/ATAPI standard well known in the art. The protocol and the commands defined therein may be adapted to exchange specific messages and data, as required by the invention. Other suitable protocols may well be used instead of the ATA/ATAPI standard.

The STB 500 comprises STB encryption features 503 that may be used to secure data exchanges between the STB 500 and the HD 501. The STB 500 further comprises STB memory 504, e.g. RAM, ROM, Electrically Erasable Programmable Read-Only Memory (EEPROM)), Flash memory or any other type of memory, and a processing unit 505. The processing unit 505 includes functionality to process data stored in STB memory 504, to generate random data, to generate and measure time delays, etc... More generally the processing unit 505 may be designed to control an operation of the STB 500 and devices connected to the STB 500.

The HD 501 comprises HD encryption features 506 that may be used to secure data exchanges between the HD 501 and the STB 500. The HD 501 further comprises HD memory 507, e.g. RAM, ROM, EEPROM, Flash memory or any other type of memory, and a processing unit 508. The processing unit 505 includes functionality toprocess data stored in the HD memory 507, to generate random data, and to generate and measure time delays. More generally the processing unit 508 may be designed to control an operation of the HD 501 and devices connected to the HD 501.

### Pairing of HD and STB

A manufacturing of a system comprising a HD and a STB includes a customisation step, or pairing, which allows the system to uniquely associate the HD and the STB.

The pairing may be based on individual serial numbers of the HD and STB used in the system. Each HD and STB, respectively, has a unique identification number that is stored as a serial number in a memory of the HD and STB at manufacturing of the HD and the STB.

The pairing may be further based on key pairs, each comprising a private and a public key. Such keys are typically used to hash and sign messages and data. The private and the public keys of a pair are used at different location. As suggested by the name, the private key is kept secret by its owner while the corresponding public key may be freely distributed. The private key in particular is used to sign and hash a message. The hashed and signed message may only be correctly recovered with the use of the corresponding public key. Accordingly, a recipient of the hashed and signed message needs to be in possession of the corresponding public key. On the other hand, the corresponding public key may be used by anyone to encrypt a message. The resulting encrypted message may only be decrypted using the private key.

In the present example of pairing, 1 pair of private/public keys will be made available for each the HD and the STB. In a preferred embodiment, each separate HD-STB system has its own and unique 2 pairs of keys.

Both the HD and the STB include specific pairing software that allows them to exchange pairing data and to store the pairing data at determined locations as will be explained hereunder.

The pairing software may for example be a specific set of commands to control an operation of the HD. Depending on a standard of the HD used, a corresponding standard set of commands may be adapted for the pairing. For example if the well known ATA/ATAPI 5 commands are used, it may be necessary to suppress certain standard commands, such as a command for downloading a firmware of the HD, and to add new commands to enable new functions.

The pairing software may comprise specific software for the STB, such as a pairing library.

The pairing software may be designed to be partly used after the pairing as well in a subsequent process of mutual verification of identity as will be described in a dedicated section of this specification. In this case a part of the software used for pairing only is deleted from the HD and/or the STB after the pairing.

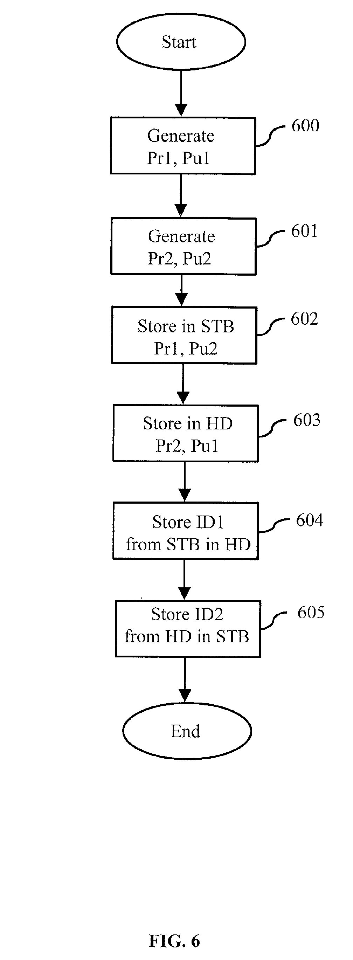

Referring to Fig. 6, a flow chart shows an example of steps executed by the pairing software that is executed for example in the STB. All data sent from the STB to the HD is sent using an ATA command.

A pair of private and public keys Pr2 and Pu2 is generated for the HD in box 601. Similarly a pair of private and public keys Pr1 and Pr1 is generated for the STB in box 600.

The pairing software stores the private key Pr1 and the public key Pu2 in the STB as shown in box 602. For example, the private key Pr2 and the public key Pu2 may be stored in an EEPROM memory of the STB.

Similarly the pairing software stores the private key Pr2 and the public key Pu1 in the HD as shown in box 603. This can for example be in an EEPROM memory of the HD.

In a preferred embodiment an address in the STB EEPROM at which the keys Pr1 and Pu2 have been stored, may be stored as well and later be used during a mutual verification of identity between the STB and the HD to find and retrieve the keys Pr1 and Pu2. Similarly, an address in the HD EEPROM at which keys Pr2 and Pu1 have been stored, may be stored as well and later be used during a mutual verification of identity between the STB and the HD to find and retrieve the keys Pr2 and Pu1.

Further steps executed by the pairing software include reading an identification ID1 from the STB, e.g., a serial number permanently stored in the STB, and storing ID1 in the HD as shown in box 604. This can for example be in an EEPROM memory of the HD.

The pairing software then executes a reading of an identification ID2 from the HD, e.g., a serial number permanently stored in the HD, and storing ID2 in the STB as shown in box 605. This can for example be in an EEPROM memory of the STB.

In a preferred embodiment the pairing software performs all the storing and exchange operations described in reference to Fig. 6 automatically without intervention from the manufacturer. This way the content of the messages exchanged between the HD and the STB remains hidden from the manufacturer.

### Mutual verification of identity

The mutual verification of identity typically occurs while the STB and HD cooperate in an operation of the STB system. Generally the STB and HD perform a process which allows them to verify that the STB-HD system has not been changed since the pairing process, i.e., that the STB and the HD used are unchanged since pairing.

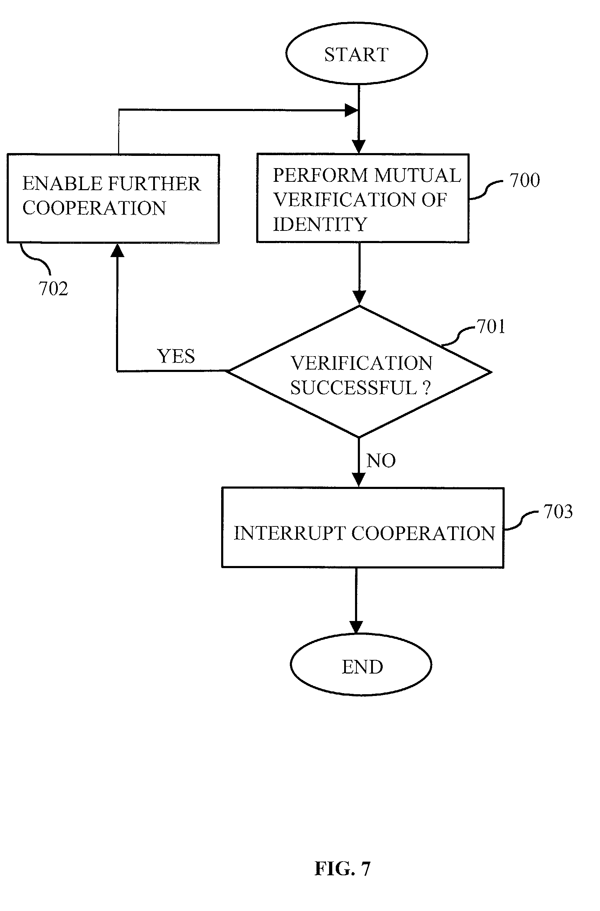

Fig. 7 contains a flowchart illustrating a general example of a mutual verification of identify between the STB and the HD. The mutual verification of identity is performed in box 700. If the verification is successful in box 701, i.e. if the verification shows that the STB and the HD mutually recognize each other, then further cooperation between the STB and the HD is enabled in box 702 and the mutual verification of identity may be performed again at a later time. If no successful verification is achieved, the cooperation between the STB and the HD is interrupted, as shown in box 703. In other words the system of STB and HD implements appropriate measures to interrupt cooperation, e.g., the system stops, the HD erases itself, or the system displays generates an error signal. Any other measures to interrupt cooperation may be used.

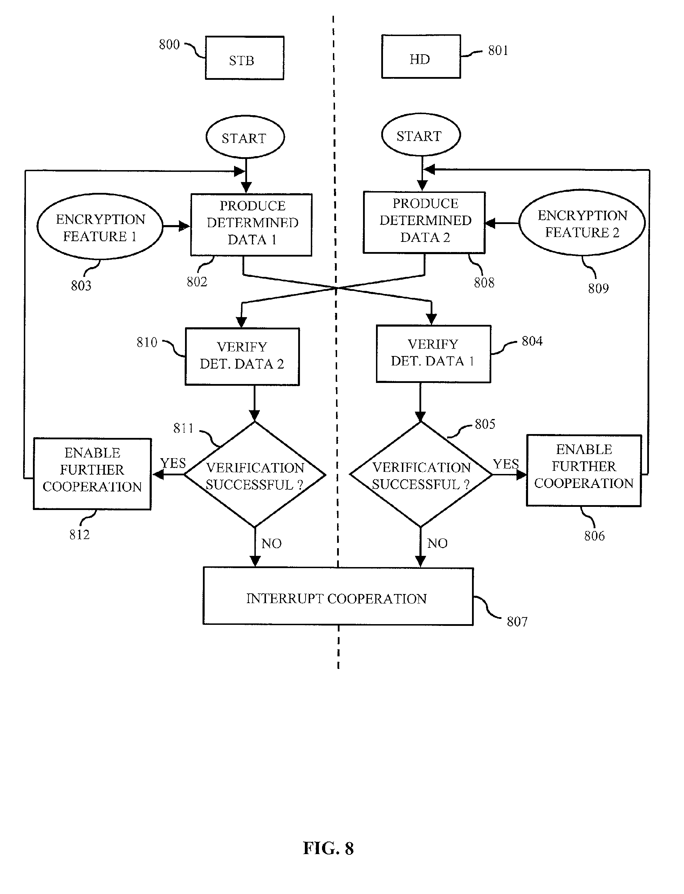

Fig. 8 contains a flowchart illustrating an example of steps performed in a STB and steps performed in a HD. In the STB 800, determined data 1 is produced in box 802 by using an encryption feature 1 shown in box 803. The encryption feature 803 may be a feature specific to the STB 800, e.g., a determined key, a determined encryption algorithm or any other characteristic of encryption. The determined data 1 is then transmitted to the HD 801 and verified in box 804. The verification in box 804 checks whether determined data 1 is characteristic of the encryption feature 1. The verification in box 804 may therefore require to use information related to the encryption feature 1 or to the determined data 1 (not shown in Fig. 8) that was previously stored in the HD 801. If the verification in box 804 is recognised as successful in box 805, then further cooperation between the STB and the HD is enabled in box 806. In the case where the verification fails to be successful, the cooperation is interrupted in box 807.

Similarly, in the HD 801, determined data 2 is produced in box 808 by using an encryption feature 2 shown in box 809. The encryption feature 809 may be a feature specific to the HD 801, e.g., a determined key, a determined encryption algorithm or any other characteristic of encryption. The determined data is then transmitted to the STB 800 and verified in box 810. The verification in box 810 checks whether determined data 2 is characteristic of the encryption feature 2. The verification in box 810 may therefore require to use information related to the encryption feature 2 or to the determined data 2 (not shown in Fig. 8) that was previously stored in the STB 800. If the verification in box 810 is recognised as successful in box 811, then further cooperation between the STB and the HD is enabled in box 812. In the case where the verification fails to be successful, the cooperation is interrupted in box 807.

It is understood that any verification leading to an interruption of cooperation in box 807 prevails on a successful verification, i.e., it is sufficient that only one verification 804 or 810 fails to be successful to result in an interrupted cooperation.

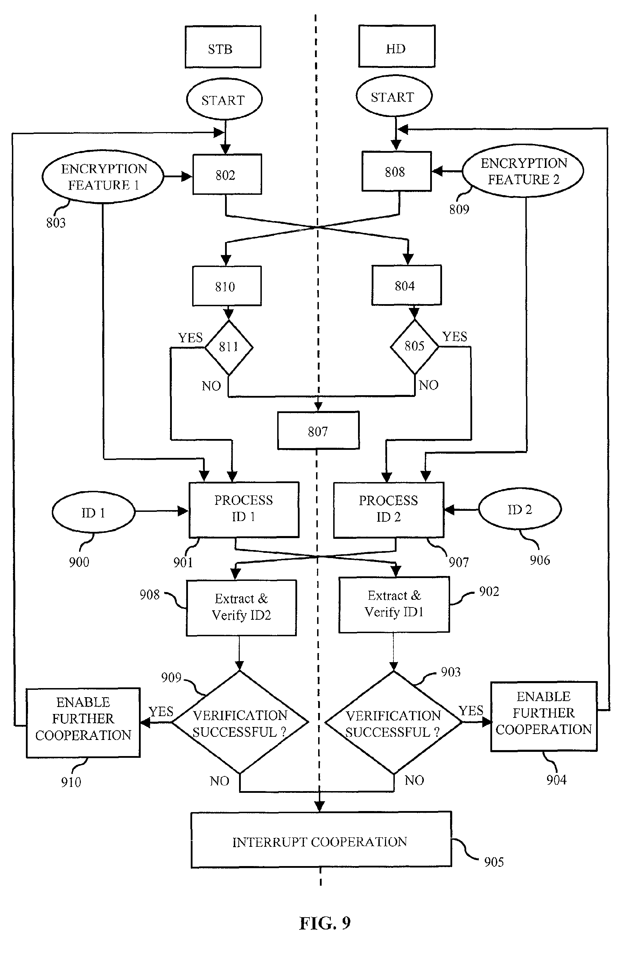

Fig. 9 shows a flowchart in which steps have been added to the example illustrated in Fig. 8. Therefore boxes shown in Fig. 8 have been referenced by the same reference numbers in Fig. 9 and these boxes will not be explained again. Following a successful verification in box 811, an identification ID1 shown in box 900 is processed in box 901 using the encryption feature 1 from box 903. The processed ID1 is transmitted to the HD to be extracted and verified in box 902. The extraction of ID1 may correspond to a reverse processing of the process performed in box 901, e.g. a decryption if ID1 has been encrypted. The result of the extraction of ID1 is verified, i.e., any type of operation such as a comparison with a stored value or a test of integrity may be applied. If the verification in box 902 is recognised as successful in box 903, then further cooperation between the STB and the HD is enabled in box 904. In the case where the verification fails to be successful, the cooperation is interrupted in box 905.

Similarly, following a successful verification in box 805, an identification ID2 shown in box 906 is processed in box 907 using the encryption feature 2 from box 809. The processed ID2 is transmitted to the STB to be extracted and verified in box 908. The extraction of ID2 may correspond to a reverse processing of the process performed in box 907, e.g., a decryption if ID2 has been encrypted. The result of the extraction of ID2 is verified, i.e., any type of operation such as a comparison with a stored value or a test of integrity may be applied. If the verification in box 908 is recognised as successful in box 909, then further cooperation between the HD and the STB is enabled in box 910. In the case where the verification fails to be successful, the cooperation is interrupted in box 905.

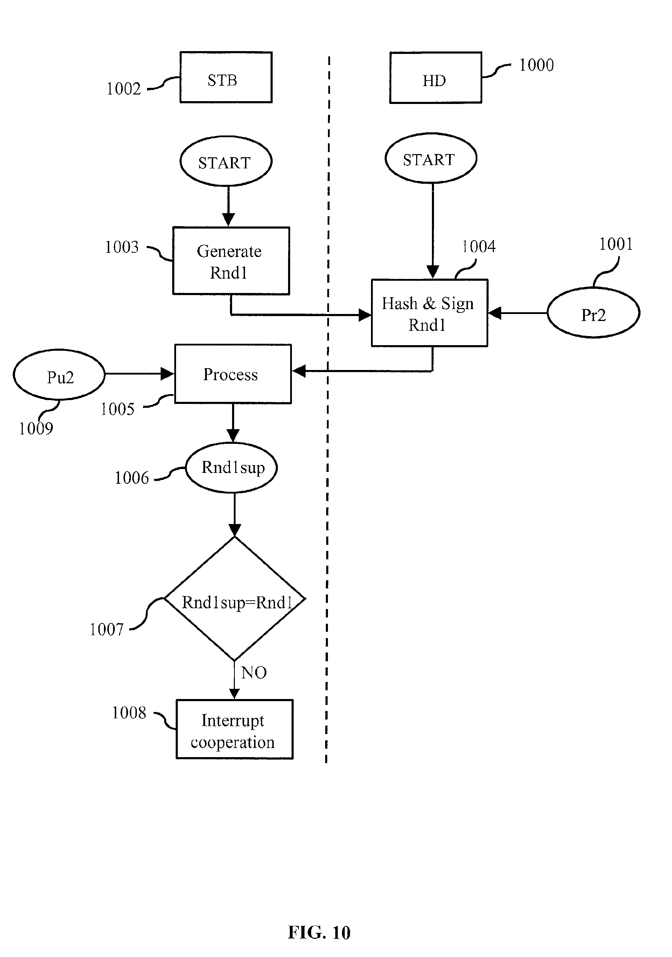

Fig. 10 shows an example of a preferred embodiment in which an encryption feature related to a private key Pr2 in box 1001 of an HD 1000 is verified in an STB 1002. In the STB 1002 a random message Rnd1 is generated in box 1003. The message Rnd1 is transmitted to the HD 1000, where it is hashed and signed in box 1004 using the private key Pr2 that was stored in the HD 1000 during the process of pairing. Hashing and signing are processes that affect the message Rnd1 in a manner well known by a person skilled in the art. The hashed and signed Rnd1 is transmitted to the STB 1002 to be processed in box 1005 using a public key Pu2 of box 1009, that corresponds to the private key Pr2 and was stored in the STB 1002 during the process of pairing. The processing in box 1005 would normally allow for recovery of the message Rnd1 that was initially generated in box 1003. A result of the processing in box 1005 is obtained as Rnd1sup in box 1006 and compared to Rnd1 in box 1007. In case where the comparison in box 1007 reveals that Rnd1 sup and Rnd1 are different then cooperation between the STB and the HD is interrupted in box 1008. In case Rnd1 sup and Rnd1 are different, it may be concluded for example that the HD 1000 uses a different key then expected from the STB, to hash and sign the message Rnd1. Other conclusions may be considered, such as that the transmission of data between the STB 1002 and the HD 1000 is faulty or that a different processing than the expected signing and hashing is used in the HD 1000 on the message Rnd1. It is likely that the HD is not the HD that was installed in the system at a time of pairing and therefore use of the HD with the STB is interrupted.

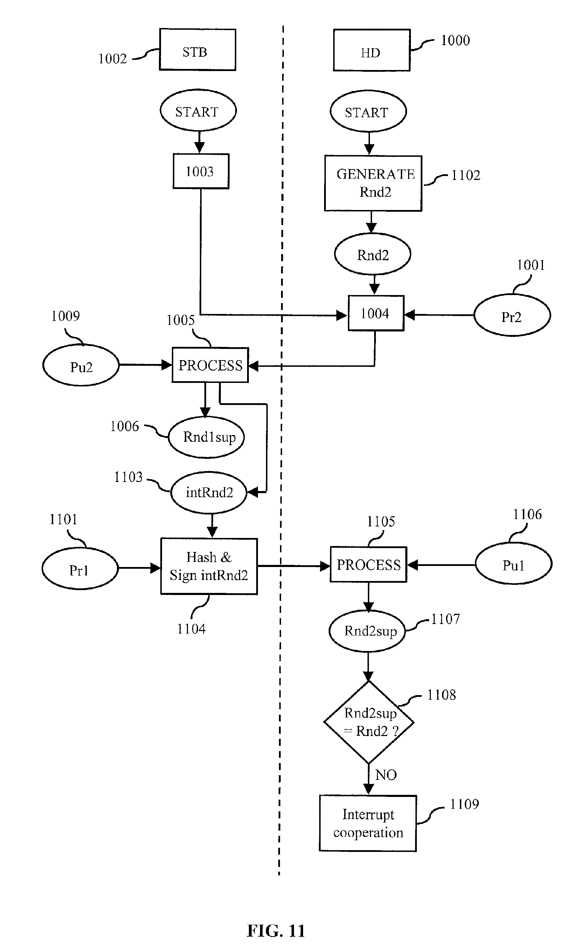

Fig. 11 shows an example of another embodiment in which an encryption feature related to a private key Pr1 in box 1101 of the STB 1002 is verified in the HD 1000. This example builds on the flowchart shown in Fig. 10, and the same boxes are referenced with the same reference numbers throughout Fig. 10 and Fig. 11. In the HD 1000 a random message Rnd2 is generated in box 1102. The message Rnd2 is transmitted to the STB 1002 after having been hashed and signed in box 1004 using the private key Pr2 of box 1001. The random message Rnd2 may be transmitted together with the random message Rnd1 previously received from box 1003. The hashed and signed random message Rnd2 is processed in box 1005 using the public key Pu2 of box 1009, that corresponds to the private key Pr2, and an intermediate message intRnd2 in box 1103 is obtained. As the use of the encryption feature related to the private key Pr2 and the public key Pu2 is verified using the steps in boxes 1003 to 1007, and the cooperation between the STB and the HD is interrupted if the verification fails as described in reference to Fig. 10, it may be assumed that the result intRnd2 in box 1103 is the same as Rnd2. The intermediate message intRnd2 is hashed and signed in box 1104 using the private key Pr1 of box 1101, and transmitted to the HD 1000 for processing in box 1105 using a public key Pu1 of box 1106, that corresponds to the private key Pr1 and was stored in the HD 1000 during the process of pairing. The processing in box 1105 would normally allow for recovery of the message Rnd2 that was initially generated in box 1102. A result of the processing in box 1105 is obtained as Rnd2sup in box 1107 and compared to Rnd2 in box 1108. In case the comparison in box 1108 reveals that Rnd2sup and Rnd2 are different then cooperation between the HD and the STB is interrupted in box 1109.

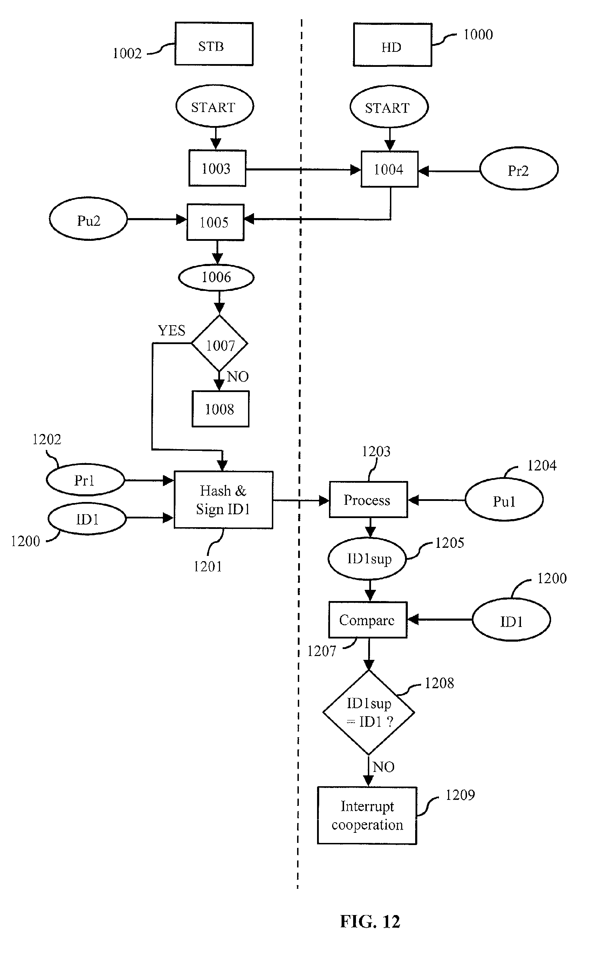

Fig. 12 shows an example of yet another embodiment in which an identification ID1 of the STB 1002 in box 1200 is verified in the HD 1000. This example builds on the flowchart shown in Fig. 10, and the same boxes are referenced with the same reference numbers throughout Fig. 10 and Fig. 11. In the STB 1002, if the verification in box 1007 reveals that Rnd1 sup is identical to Rnd1, then the identification ID1, which was previously stored in the STB, e.g., as a serial number of the STB stored by the manufacturer of the STB 1002, is hashed and signed in box 1201 using a private key Pr1 shown in box 1202. The hashed and signed ID1 is transmitted to the HD 1000 to be processed in box 1203 using a public key Pu1 from box 1204, that corresponds to the private key Pr1 and was stored in the HD 1000 during the process of pairing. The processing in box 1203 would normally allow to recover the identification ID1. A result of the processing in box 1203 is obtained as ID1 sup in box 1205 and compared in box 1207 to ID1 from box 1206. The identification ID1 from box 1206 was stored in the HD 1000 during the process of pairing. In case the comparison in box 1207 reveals that ID1 sup and ID1 are different (box 1208) then cooperation between the HD and the STB is interrupted in box 1209. The latter result may occur if the STB 1002 is not the one that was initially paired with the HD 1000.

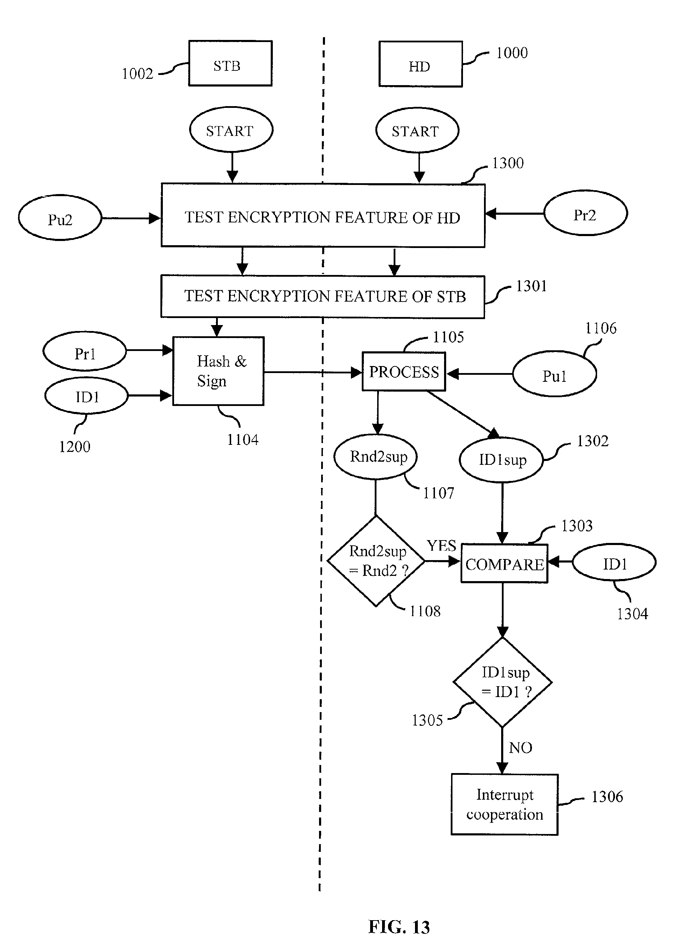

An example of a further preferred embodiment results from combining the verification of the identification ID1 from the STB 1002 with the method shown in the flowchart of Fig. 11. This is explained referring to Fig. 13. The same boxes are referenced with the same reference numbers throughout Fig. 11 and Fig. 13, boxes 1003, 1004, 1005 and 1006 being summarized in a box 1300, and boxes 1102, 1004, 1005 and 1103 being summarized in a box 1301. The hashing and signing in box 1104 is applied to the identification ID1 from box 1200. The hashing and signing may well apply to a single message containing the value intRnd2 (not shown in Fig. 13) and the identification ID1. The hashed and signed message is transmitted to the HD 1000 for processing in the box 1105 using the public key Pu1 from box 1106. The processing in box 1105 would normally allow for recovery of both the random message Rnd2 and the identification ID1. A result of the processing in box 1105 is obtained as both RND2sup in box 1107 and ID1sup in box 1302. If the verification in box 1108 reveals that Rnd2sup and Rnd2 are identical, then it can be assumed that the encryption feature related to the private key Pr1 is properly working. Since the encryption feature related to the private key Pr1 has also been used to hash and sign the transmitted identification ID1, the result of processing in box 1105, namely the value ID1sup in box 1302, is compared in box 1303 to an identification ID1 from box 1304 that was stored in the HD 1000 during the process of pairing. In case the comparison in box 1303 reveals that ID1sup and ID1 are different (box 1305) then cooperation between the HD and the STB is interrupted in box 1306. The latter result may occur if the STB 1002 is not the one that was initially paired with the HD 1000.

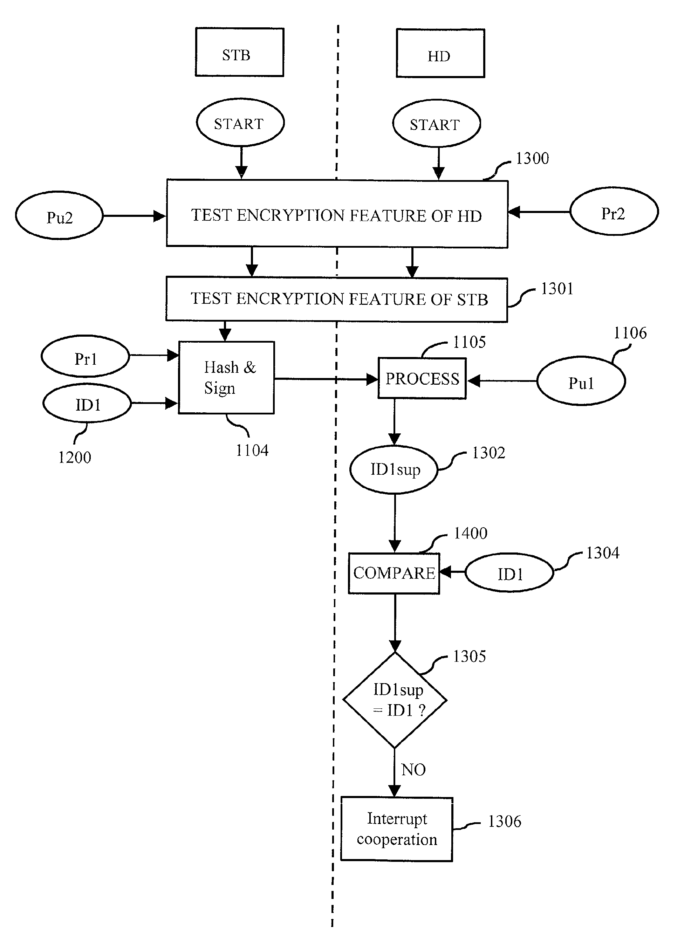

In an example of a yet further preferred embodiment the identification ID1 of the STB 1002 may be verified in the HD 1000 without being subjected to the result of the verification in box 1108 shown in Fig. 13. This is shown in a flowchart of Fig. 14. The flowchart in Fig. 14 differs from the flowchart in Fig. 13 in that no comparison of the value Rnd2sup with Rnd2 needs to be done before ID1 sup is compared with ID1. Therefore the box illustrating the comparison of ID1 sup with ID1 was given a new reference number 1400 instead of 1303.

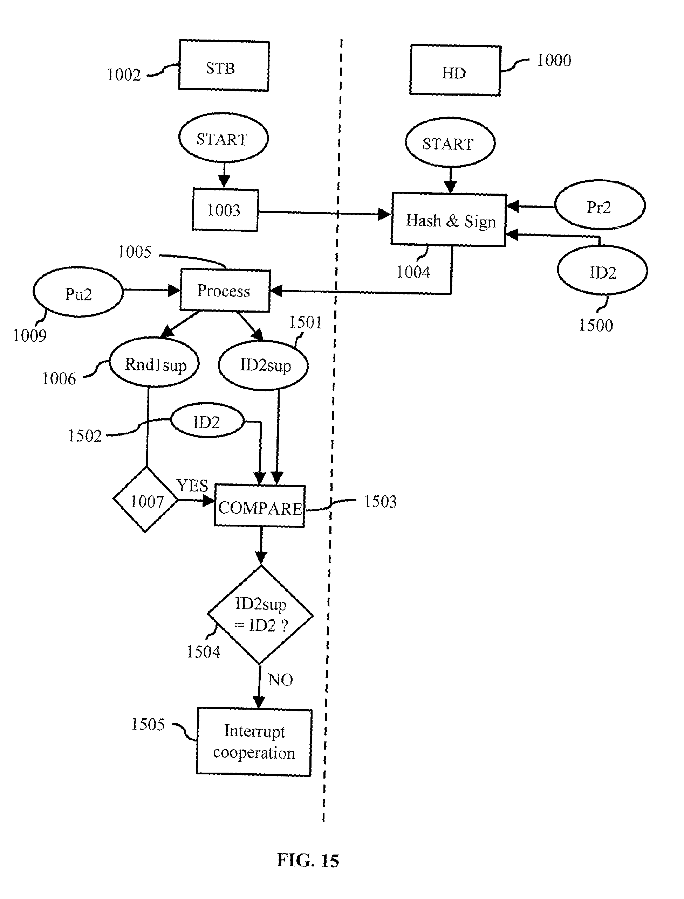

Fig. 15 shows an example of a preferred embodiment in which an identification ID2 in box 1500 of the HD 1000 is verified in the STB 1002. This example builds on the flowchart shown in Fig. 10, and same reference numbers designate same boxes throughout Fig. 10 and Fig. 15. The identification ID2 is hashed and signed in box 1004 using the private key Pr2 and transmitted to box 1005 of the STB 1002 for processing. The identification ID2 may be included in a message together with the random message Rnd1 (not shown in Fig. 15). The processing in box 1005 results in both the message Rnd1sup in box 1006 and an identification ID2sup in box 1501. If Rnd1sup is found to be identical to Rnd1 in box 1007, the message ID2sup from box 1501 is compared in box 1503 to an identification ID2 from box 1502, that was stored in the STB 1002 during the process of pairing. If ID2sup and ID2 reveal to be different in box 1504 then the cooperation between the STB and the HD is interrupted in box 1505. The latter result may occur if the HD1000 is not the one that was initially paired with the STB 1002.

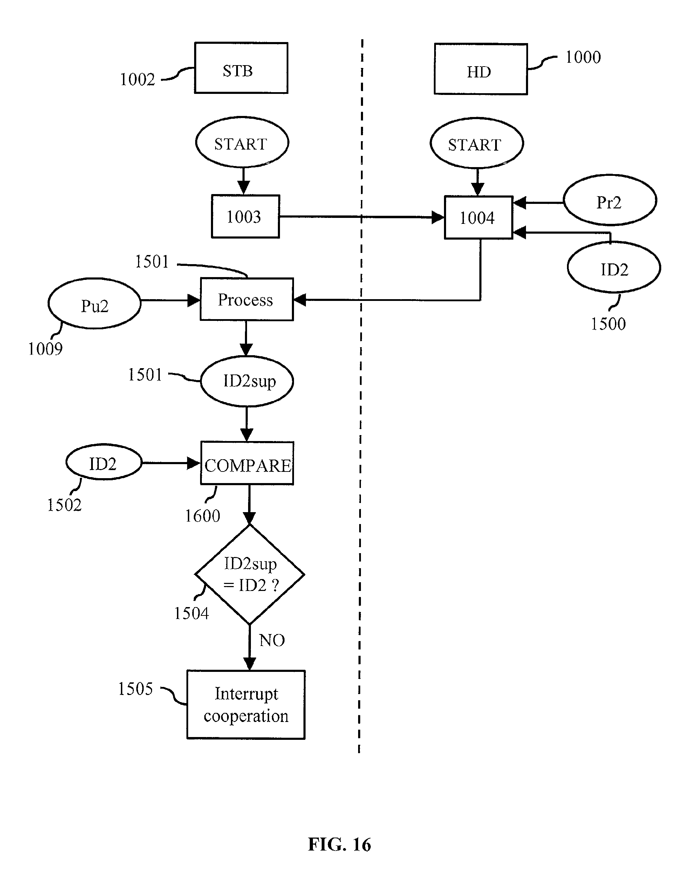

In a further example the identification ID2 of the HD 1000 may be verified in the STB 1002 without being subjected to the result of verification in box 1007 shown in Fig. 15. This is shown in a flowchart of Fig. 16. The flowchart in Fig. 16 differs from the flowchart in Fig. 15 in that no comparison of the value Rnd1sup with Rnd1 needs to be done before ID2sup is compared with ID2. Therefore the box illustrating the comparison of ID1sup with ID1 was given a new reference number 1600 instead of 1503.

In additional examples of embodiments the flowcharts shown in Fig. 15 and Fig. 16 may each be combined to either one of flowcharts shown in Fig. 13 and Fig. 14, by transmitting the identification ID2 from the HD to the STB, in a hashed and signed message using the private key Pr2. Hence is possible, using the invention, to perform mutual verifications of the encryption features related to the private keys Pr1 and Pr2, and mutual verifications of identifications ID1 and ID2 of the STB and the HD respectively.

### Time window

The mutual verification of identity may be performed in a time window as will be explained in the following examples.

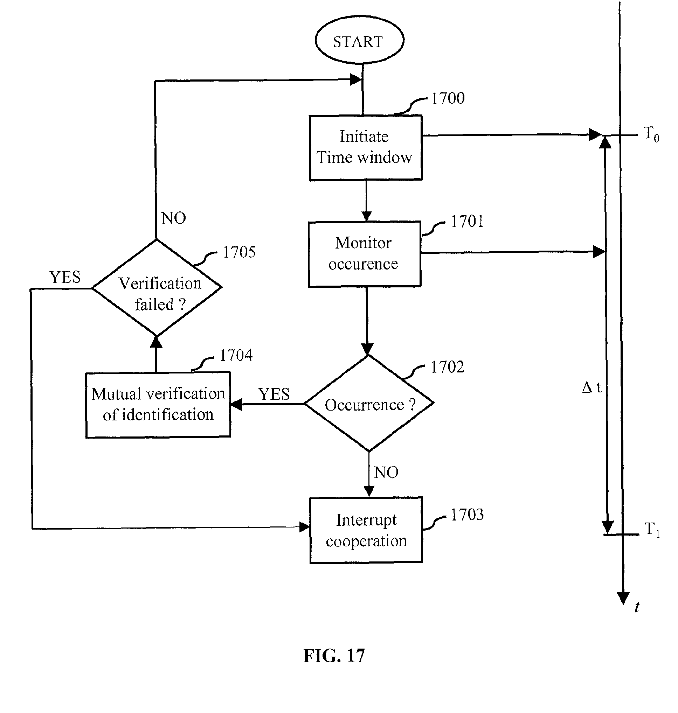

Fig. 17 contains a flowchart illustrating an example of embodiment in which a time window Δ*t* is initiated at box 1700 in the system comprising the STB and the HD. Starting from an instant T0 and until an instant T1 = T0+ *Δt,* an occurrence of a mutual verification of identity is monitored at box 1701. In case that no occurrence is detected until the instant T1 in box 1702, the cooperation between the STB and the HD is interrupted in box 1703. In case an attempt to perform a mutual verification of identity between the STB and the HD is detected, the verification is performed in box 1704. The verification may for example comprise anyone of the described examples of embodiments described herein. If in box 1705 the verification fails, then co-operation between the STB and the HD is interrupted. In case the verification is successful, a new time window may be initiated.

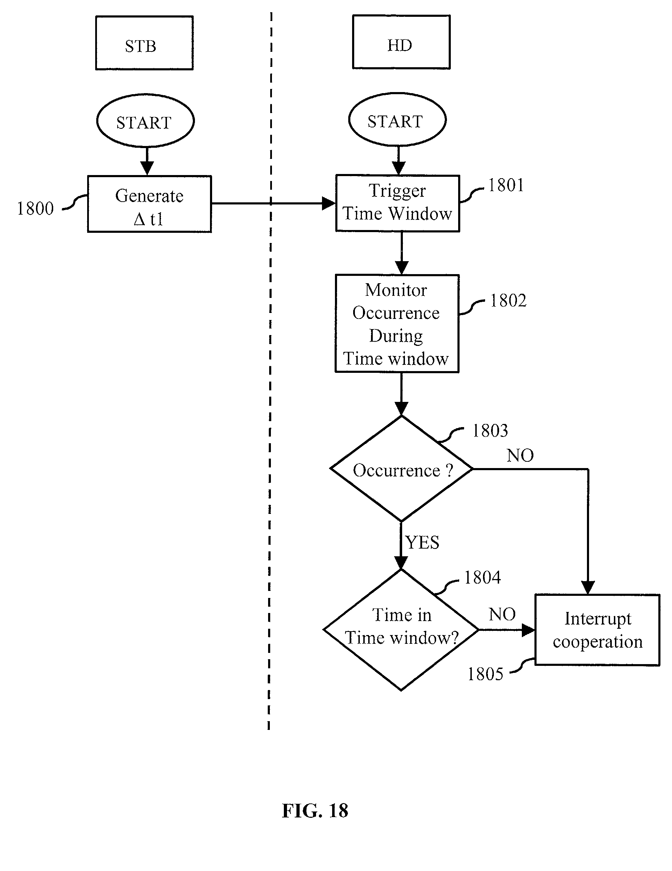

Fig. 18 illustrates an example embodiment for implementing a time window between the STB and the HD. A first time value Δ*t*1 is generated in the STB in box 1800 and transmitted to the HD. Following reception of the first time window in the HD, a time window is triggered in box 1801 during which the occurrence of a mutual verification of identity between the STB and the HD is monitored in box 1802. If in box 1803 an attempt to perform a verification is detected, then it is checked if the attempt took place during the time window in box 1804. If the attempt took place outside of the time window, the cooperation between the STB and the HD is interrupted in box 1805. If no attempt to perform a mutual verification is detected in box 1803, then the cooperation between the STB and the HD is interrupted in box 1805.

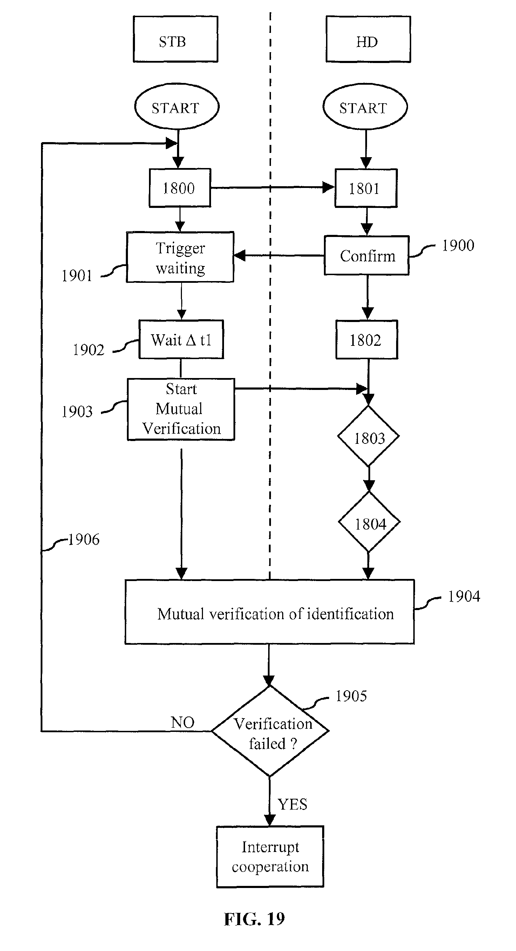

Fig. 19 illustrated a further example in which a time window is implemented. Boxes 1800 to 1804 in fig. 19 are the same as in Fig. 18. Following reception of the first time value in box 1801, a confirmation is sent to the STB in box 1900. On reception of the confirmation message in the STB, a further time window corresponding to the first time value is triggered in the STB in box 1901. After waiting during the further time window in box 1902, the STB starts a mutual verification of identity in box 1903. The start of a mutual verification is detected in the HD, and after verifications in boxes 1803 and 1804, the mutual verification of identity between the STB and the HD is performed in box 1904. If the mutual verification fails in box 1905, then the cooperation between the STB and the HD is interrupted. If the opposite case, a new time window may be generated as illustrated by arrow 1906

In a preferred embodiment a second time value may be generated in the HD, for example in box 1801, that defines a time interval corresponding to the time window, during which the monitoring of box 1802 takes place.

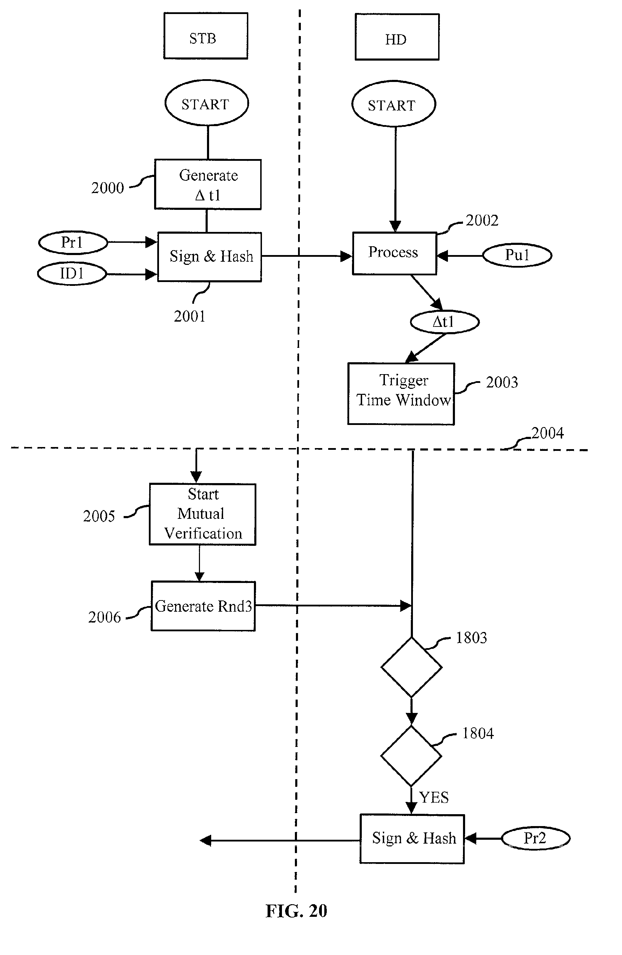

The generation of a time window may be integrated in a process of mutual verification of identity. Fig. 20 contains a flowchart illustrating an example of integrating the generation of a time window in a process of mutual verification. According to this example the first time value Δ*t*1 is generated in box 2000 in the STB. The first time value Δ*t*1 is subsequently hashed and signed using the private key Pr1, together in a message with the first identification ID1, in box 2001. The hashed and signed message is transmitted to the HD and processed in box 2002. The first time value Δ*t*1 is extracted using the public key Pu1, and following the extraction a time window is triggered in box 2003. Optionally, the HD may confirm reception of the first time value and the STB may wait for a determined time (not shown in Fig. 20) as described in the example from Fig. 19.

In box 2005, the STB starts a process of mutual verification and a random message Rnd3 is generated in box 2006. As the random message Rnd3 is transmitted to the HD, the HD detects a valid occurrence of the mutual verification of identity in boxes 1803 and 1804 if the detection occurs during the time window. Subsequently the random message Rnd3 is hashed and signed using the private key Pr2 and transmitted to the STB for further processing of the mutual verification of identity.

### Example of method for securing a system

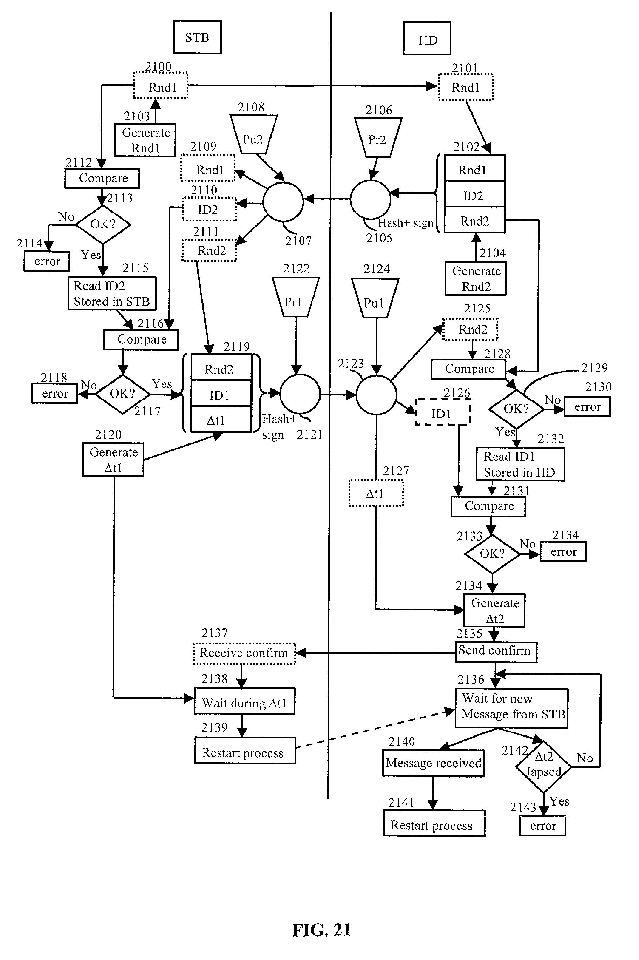

Fig. 21 illustrates a general example of a method for securing a system comprising a STB and a HD.

A random message Rnd1 in box 2100 is generated in box 2103 on the side of the STB and transmitted to the HD in box 2101. The random message Rnd1 from box 2101 is inserted into a message in box 2102. The message from box further comprises an identification ID2 which is stored in the HD and a second random message Rnd2. The identification ID2 may for example be a serial number of the HD. The random message Rnd2 is generated in the HD in box 2104. The message 2102 is hashed and signed in box 2105 using a private key Pr2 of the HD in box 2106.

The hashed and signed message is transmitted to the SBT and processed in box 2107 using a public key Pu2 in box 2108 corresponding to the private key Pr2. As a result the random message Rnd1, the identification ID2 and the random number Rnd2 are obtained in boxes 2109, 2110 and 2111. The latter boxes are represented in dotted lines to show that their content needs to be verified, since it is not yet established that the system comprising the STB and the HD is unchanged since the process of pairing.

The random message Rnd1 form box 2109 is compared in box 2112 with the random message Rnd1 form box 2100. If in box 2113 it is found that the random messages from boxes 2100 and 2109 are different then an error is reported in box 2114, that may lead to interrupt cooperation between the STB and the HD.

In case in box 2113 the random messages from boxes 2109 and 2100 are found to be the same, an identification ID2 stored in the STB is read in box 2115 and compared with the identification ID2 from box 2110 in a compare box 2116. If the identifications from boxes 2115 and 2110 are found to be different in box 2117, then an error is reported in box 2118.

In case in box 2117 the identifications from boxes 2115 and 2110 are found to be same, then a message 2119 is created comprising the random message Rnd2 from box 2111, an identification ID1 and a first time value Δ*t*1. The identification ID1 which is stored in the STB may for example be a serial number of the STB. The first time value Δ*t*1 is generated in the STB in box 2120.

The message 2119 is hashed and signed in box 2121 using a private key Pr1 from box 2122, and transmitted to the HD, where it is processed in box 2123 using a public key Pu1 from box 2124, which corresponds to the private key Pr1. As a result the random message Rnd2, the identification ID1 and the first time value Δ*t*1 are obtained as represented in dotted boxes respectively referenced with 2125, 2126 and 2127.

The random message Rnd2 from box 2125 is compared in box 2128 with the random message Rnd2 which was generated in the HD in box 2104.

If the random messages from box 2125 and box 2104 are found to be different in box 2129, then an error is generated in box 2130.

If the random messages from box 2125 and box 2104 are found to be the same in box 2129, then a comparison is made in box 2131 between the identification ID1 from box 2126 and the identification ID1 from box 2132. The identification ID1 is stored in the HD and read in box 2132.

If in box 2133 the Identification from box 2126 is found to be different from the identification of box 2132, then an error is reported in box 2134.

If in box 2133 the Identification from box 2126 is found to be the same as the identification of box 2132, then a second time value Δ*t*2 is generated in box 2134, as a function of the first time value Δ*t*1 from box 2127. A confirmation for a receiving of the first time value Δ*t*1 in box 2127 is generated and sent to the STB in box 2135. In box 2136, reception of a message from the STB is monitored in the HD during a time window lasting for the second time value Δ*t*2.

In the STB the confirmation of reception sent from box 2135 is received in box 2137, and triggers a wait cycle in box 2138 that lasts as long as the first time value Δ*t*1. Following the wait cycle, a process of mutual verification of identity is started in box 2139 on side of the STB, similar to the process starting with the generation of a random message in box 2103 and box 2100.

The starting of the process in box 2139 triggers a message received status in box 2140, that on turn triggers the process of mutual verification of identify to start on side of the HD in box 2141.

If on side of the HD, after a duration corresponding to the second time value Δ*t*2, no message is received from the STB, then in box 2142 an error is reported in box 2143.

The key pairs (Pr1, Pu1) and (Pr2, Pu2), as well as the identifications ID1 and ID2 are stored in the STB and HD as appropriate during the process of pairing.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method for securing a system comprising a first device cooperating with a second device, the first device and the second device respectively comprising a first encryption feature and a second encryption feature, the method comprising
■ Performing (700) a mutual verification of identity between the first device and the second device, and
■ Interrupting (703) the cooperation between the first device and the second device if the mutual verification of identity between the first device and the second device fails (701).

2. A method for securing a system according to claim 1, in which the performing of the mutual verification comprises
■ Verifying (810, 804) in either one device (STB, HD) from a set consisting of the first device and the second device, a determined data (808, 802) received from the other device, the determined data resulting from a use of the first encryption feature (803, 809) if the other device is the first device and of the second encryption feature if the other device is the second device.

3. A method for securing a system according to claim 2, in which the performing of the mutual verification further comprises
■ Processing (901, 907) an identification (900, 906) stored in the one device using the first encryption feature if the one device is the first device and the second encryption feature if the one device is the second device,
■ Receiving the processed identification in the other device,
■ Extracting (908, 902) the identification from the processed identification in the other device, and
■ Verifying (908, 909, 902, 903) the extracted identification.

4. A method for securing a system according to anyone of claims 1 to 3, the performing of the mutual verification further comprising
■ Generating (1003) in the first device a first random message,
■ Transmitting the first random message to the second device,
■ Generating a second message in the second device containing the first random message,
■ Hashing and signing (1004) the second message using a second private key (1001) of the second device,
■ Transmitting the hashed and signed second message to the first device,
■ Processing (1005) in the first device the hashed and signed second message using a second public key (1009) corresponding to the second private key and obtaining a supposed first random message (1006),
■ Comparing (1007) the supposed first random message and the first random message, and
■ Failing (1008) the mutual verification of identity if the supposed first random message is different from the first random message.

5. A method for securing a system according to claim 4, the performing of the mutual verification further comprising
■ Generating (1102) in the second device a second random message,
■ Generating (1004) the second message in the second device containing the first and the second random message,
■ Processing (1005) in the first device the hashed and signed second message using the second public key (1009) and obtaining an intermediate second random message,
■ Generating a third message in the first device containing the intermediate second random message,
■ Hashing and signing (1104) the third message using a first private key of the first device,
■ Transmitting the hashed and signed third message to the second device,
■ Processing (1105) in the second device the hashed and signed third message using a first public key (1106) corresponding to the first private key and obtaining a supposed second random message (1107),
■ Comparing (1108) the supposed second random message and the second random message, and
■ Failing (1109) the mutual verification of identity if the supposed second random number is different from the second random number.

6. A method for securing a system according to claim 4, the performing of the mutual verification further comprising
■ Generating (1201) a fourth message in the first device containing a first identification (1200) stored in the first device,
■ Hashing and signing (1201) the fourth message using a first private key (1202) of the first device,
■ Transmitting the hashed and signed fourth message to the second device,
■ Processing (1203) in the second device the hashed and signed fourth message using a first public key (1204) corresponding to the first private key and obtaining a supposed first identification (1205),
■ Comparing (1207) the supposed first identification and the first identification stored in the second device, and
■ Failing (1209) the mutual verification of identity if the supposed first identification is different from the first identification.

7. A method for securing a system according to claim 5, the performing of the mutual verification further comprising
■ Generating (1104) the third message in the first device containing the intermediate second random message and a first identification (1200) stored in the first device,
■ Processing (1105) in the second device the hashed and signed third message using a first public key (1106) corresponding to the first private key and obtaining a supposed first identification (1302),
■ Comparing (1303) the supposed first identification and the first identification (1304) stored in the second device, and
■ Failing (1306) the mutual verification of identity if the supposed first identification is different from the first identification.

8. A method for securing a system according to anyone of claim 4, 5 or 7, the performing of the mutual verification further comprising
■ Generating (1004) the second message in the second device containing a second identification (1500) stored in the second device,
■ Processing (1005) in the first device the hashed and signed second message using the second public key and obtaining a supposed second identification,
■ Comparing (1503) the supposed second identification and the second identification stored in the first device, and
■ Failing (1505) the mutual verification of identity if the supposed second identification is different from the second identification.

9. A method for securing a system comprising a first device cooperating with a second device, the method comprising
■ Initiating (1700) a time window,
■ Monitoring (1701) an occurrence of a mutual verification of identity between the first device and the second device during the time window, and
■ Interrupting (1703) the cooperation between the first device and the second device if the mutual verification of identity between the first device and the second device fails to occur during the time window.

10. A method for securing a system according to claim 9, further comprising
■ Performing (1704) the mutual verification of identity between the first device and the second device during the time window, and
■ Interrupting (1703) the cooperation between the first device and the second device if the mutual verification of identity between the first device and the second device fails.

11. A method for securing a system according to claim 10, further comprising
■ Initiating a further time window following a successful mutual verification of identity between the first device and the second device.

12. A method for securing a system according to claim 9, in which the initiating a time window comprises
■ Generating (1800) a first time value in the first device,
■ Transmitting the first time value to the second device,
■ Generating (1801) a second time value in the second device, the second time value being a function of the first time value,
And in which the monitoring of an occurrence of a mutual verification of identity comprises
■ Waiting (1802) in the second device for a determined signal of mutual verification of identity to be received from the first device during the time window corresponding to the second time value, the determined signal representing the occurrence of a mutual verification of identity,and
■ Failing (1805) the occurrence of a mutual verification of identity if the determined signal fails to be received during the time window.

13. A method for securing a system according to claim 12, further comprising
■ Transmitting (1900) a confirmation message to the first device for confirming a reception of the first time value,
■ Triggering (1901) a first time interval corresponding to the first time value on reception of the confirmation message,
■ Generating (1903) the determined signal of mutual verification of identity after the first time interval has lapsed, and
■ Transmitting the determined signal of mutual verification of identity to the second device.

14. A method for securing a system according to claim 7, further comprising
■ Generating (2000) a first time value in the first device,
■ Including (2001) the first time value in the third message,
■ Processing (2002) in the second device the third message and obtaining the first time value,
■ Generating (2003) a second time value in the second device, the second time value being a function of the first time value,
■ Waiting in the second device for a third random message to be received from the first device during a second time interval corresponding to the second time value, and
■ Failing the mutual verification of identity if the third random message fails to be received during the second time interval.

15. A method for securing a system according to claim 14, further comprising
■ Transmitting a confirmation message to the first device for confirming a reception of the first time value,
■ Triggering a first time interval corresponding to the first time value on reception of the confirmation message,
■ Generating the third random message after the first time interval has lapsed, and
■ Transmitting the third random message to the second device.

16. A method for securing a system comprising a first device and a second device, the method comprising
■ Generating (600) a first pair of private and public keys
■ Generating (601) a second pair of private and public keys,
■ Storing (602) in the first device the first private key and the second public key,
■ Storing (603) in the second device the second private key and the first public key,
■ Storing (605) in the first device a second identification which is stored in the second device, and
■ Storing (604) in the second device a first identification which is stored in the first device.

17. A method for securing a system according to anyone of claims 1 to 16, in which
■ The first device is a digital television Set Top Box (STB), and
■ The second device is a mass storage device connected to the STB.

18. A method for securing a system according to anyone of claims 8 or 16, in which the second identification is a serial number permanently stored in the second device.

19. A method for securing a system according to anyone of claims 6, 7 or 16, in which the first identification is a serial number permanently stored in the first device.

20. A system comprising a first device (500) and a second device (501) connected (502) to exchange data, the system further comprising
■ A first private key stored in the first device and a corresponding first public key stored in the second device (507),
■ A second private key stored in the second device and a corresponding second public key stored in the first device (504),
■ A first identification and a second identification respectively stored in both first and second devices,
■ Random message generation means (505, 508) in the first device and in the second device,
the private keys and public keys, the first identification and the second identification, and a random message generated by the random generation means being used for a mutual verification of identity process.

21. A system according to claim 20, further comprising
■ Time value generating means (505) for generating a first time value in the first device,
■ Processing means (508) in the second device for processing the first time value and generating a second time value as a function of the first time value,
■ Confirmation means (508) in the second device for sending a confirmation message to the first device on receiving the first time value,
■ Timing means in the first device (505) and the second device for measuring time intervals respectively corresponding to the first time value and the second time value, and
■ Triggering means in the first device (505) for triggering the timing means in the first device on receiving the confirmation message.

22. A system comprising a first device and a second device connected to exchange data, the system further comprising
■ Time value generating means for generating a first time value in the first device,
■ Processing means in the second device for processing the first time value and generating a second time value as a function of the first time value,
■ Confirmation means in the second device for sending a confirmation message to the first device on receiving the first time value,
■ Timing means in the first device and the second device for measuring time intervals respectively corresponding to the first time value and the second time value, and
■ Triggering means in the first device for triggering the timing means in the first device on receiving the confirmation message.

23. A digital Set Top Box (STB) system comprising a system according to anyone of claims 20 to 22, in which
■ the first device is a digital television STB, and
■ The second device is a mass storage device.
